# EUROPÄISCHE PATENTSCHRIFT

(11) **EP 3 607 626 B1**
(45) Veröffentlichungstag und Bekanntmachung des Hinweises auf die Patenterteilung: **20.01.2021**
(21) Anmeldenummer: 18716259.9
(22) Anmeldetag: 06.04.2018
(51) Int. Cl.: H02J 3/14, H02J 3/32, H02J 13/00, H02J 3/38, H02J 7/34, H02J 7/35, H02J 3/28

(54) **VERFAHREN ZUM KOORDINIEREN EINES LEISTUNGSAUSTAUSCHS ZWISCHEN EINER VIELZAHL VON TECHNISCHEN KLEINEINHEITEN UND EINEM ELEKTRISCHEN ÜBERTRAGUNGSNETZ**
METHOD FOR COORDINATING AN EXCHANGE OF POWER BETWEEN A PLURALITY OF TECHNICAL SMALL UNITS AND AN ELECTRICAL TRANSMISSION NETWORK
PROCÉDÉ DE COORDINATION D'UN ÉCHANGE DE PUISSANCE ENTRE UNE PLURALITÉ DE PETITES UNITÉS TECHNIQUES ET UN RÉSEAU DE TRANSMISSION ÉLECTRIQUE

(30) Priorität: 07.04.2017 DE 102017205968
(43) Veröffentlichungstag der Anmeldung: 12.02.2020
(73) Patentinhaber: Bayerische Motoren Werke Aktiengesellschaft, 80809 München (DE)
(72) Erfinder: KOLLING, Joachim, 85386 Eching (DE); SCHMID, Thomas, 82194 Gröbenzell (DE)
(86) Internationale Anmeldenummer: PCT/EP2018/058889
(87) Internationale Veröffentlichungsnummer: WO 2018/185300

(56) Entgegenhaltungen:
- JP-A- 2011 092 002
- US-A1- 2014 012 427

## Beschreibung

Die Erfindung betrifft ein Verfahren zum Koordinieren eines Leistungsaustauschs zwischen einer Vielzahl von technischen Kleineinheiten einerseits und einem öffentlichen, elektrischen Übertragungsnetz oder Versorgungsnetz oder Stromnetz andererseits. Die Kleineinheiten sind hierzu an dem Übertragungsnetz angeschlossen. Der Leistungsaustausch wird durch eine zentrale Steuervorrichtung gesteuert. Zu der Erfindung gehören auch die zentrale Steuervorrichtung sowie ein System, welches die Steuervorrichtung und Schalteinheiten zum Schalten der technischen Kleineinheiten umfasst.

Eine technische Einheit stellt im Zusammenhang mit der Erfindung eine technische Anlage dar, die elektrische Energie erzeugt und/oder verbraucht und/oder zwischenspeichert und hierzu über einen jeweiligen Anschluss an das Übertragungsnetz angeschlossen ist. Eine Kleineinheit ist hierbei eine technische Einheit, deren mit dem Übertragungsnetz austauschbare elektrische Leistung kleiner als 1 MW ist. Beispiele sind jeweils eine Photovoltaikanlage eines Haushalts, eine Wärmepumpe eines Gebäudes, ein stationärer Batteriespeicher und ein elektrisches Fahrzeug.

Ein Verfahren der eingangs beschriebenen Art ist beispielsweise aus der US 2013/0345884 A1 bekannt. Die aus dem Stand der Technik bekannte Steuervorrichtung zum Durchführen des Verfahrens versucht dabei, durch Schalten der Kleineinheiten eine Mindest-Gesamtleistung in dem Übertragungsnetz bereitzustellen. Handelt es sich bei den Kleineinheiten aber zum Beispiel um Photovoltaikanlagen, so muss damit gerechnet werden, dass zu einem Schaltzeitpunkt nicht jede Photovoltaikanlage die geplante elektrische Leistung liefern kann. Daher ist es bei der Steuervorrichtung aus dem Stand der Technik nötig, Überkapazitäten vorzuhalten, um die Mindestleistung garantieren zu können. Dies macht den Betrieb ineffizient

Weiter gehören die Dokumente US 2014/012427 A1 und JP 2011 092002 A zum Stand der Technik.

Im Rahmen des Betriebs von Photovoltaikanlagen in Privathaushalten ist aus dem Stand der Technik bekannt, dass man diesen das Bereitstellen eines stationären Batteriespeichers erspart, indem die Photovoltaikanlagen direkt in ein Übertragungsnetz einspeisen können und der sich so ergebende Energiebeitrag als Dienstleistung für die Photovoltaikanlagen in einem gemeinsamen Zentralspeicher aufgenommen und zwischengespeichert wird.

Der Erfindung liegt die Aufgabe zugrunde, mittels einer zentralen Steuervorrichtung effizient technische Kleineinheiten an einem Übertragungsnetz zu steuern.

Die Aufgabe wird durch die Gegenstände der unabhängigen Patentansprüche gelöst. Vorteilhafte Weiterbildungen der Erfindung ergeben sich durch die abhängigen Patentansprüche, die folgende Beschreibung sowie die Figuren.

Die Erfindung stellt ein Verfahren zum Koordinieren eines Leistungsaustauschs zwischen einer Vielzahl von technischen Kleineinheiten einerseits und einem Übertragungsnetz oder Versorgungsnetz andererseits bereit. Die Kleineinheiten sind dabei an das Übertragungsnetz angeschlossen. Unter einer Kleineinheit ist im Zusammenhang mit der Erfindung eine technische Anlage zu verstehen, die für den jeweiligen Leistungsaustausch nur eine sogenannte präqualifizierte Leistung oder Nennleistung bereitstellen kann, die kleiner als 1 MW ist. Insbesondere wird unter einer technischen Kleineinheit eine technische Anlage verstanden, die nicht selbstständig an einer Strombörse oder an einem Energiemarkt auftreten oder handeln kann. Durch das Verfahren werden deshalb die technischen Kleineinheiten derart koordiniert, dass sie insgesamt eine Infrastruktur bilden, mit welcher an einer Strombörse oder an einem Energiemarkt Verbindlichkeiten für einen Abrufplan eines Netzbetreibers des Übertragungsnetzes oder der Strombörse eingegangen werden können. Ein solcher Abrufplan beschreibt einen Fahrplan oder einen Zeitverlauf einer elektrischen Leistung, die normalerweise eine einzelne technische Einheit, beispielsweise ein Kraftwerk, an dem Übertragungsnetz gemäß vertraglicher Abmachung bereitstellen muss. Ein solcher Abrufplan ist verbindlich und kann an einer Strombörse oder einem Energiemarkt gehandelt werden. Ein Beispiel für eine solche Strombörse ist die EEX (European Energy Exchange).

Um auch mittels der Vielzahl der Kleineinheiten einen Abrufplan erfüllen zu können, betreibt die zentrale Steuervorrichtung eine Energie-Datencloud, in welcher die Steuervorrichtung Leistungsdaten der Kleineinheiten aggregiert oder sammelt. Die Energie-Datencloud kann hierzu z.B. eine Datenbank umfassen. Anhand der Leistungsdaten in der Energie-Datencloud führt die Steuervorrichtung für jede Kleineinheit jeweils die folgenden Schritte durch. Es wird ein Einzelfahrplan einer an der Kleineinheit verfügbaren elektrischen Leistung erfasst. Der Einzelfahrplan beschreibt ein Leistungsprofil oder einen Zeitverlauf der verfügbaren Leistung. Im Zusammenhang mit der Erfindung ist unter Leistung sowohl der Verbrauch als auch die Erzeugung als auch das Zwischenspeichern von elektrischer Leistung zu verstehen. Durch diesen Verfahrensschritt wird also ermittelt, was an der jeweiligen Kleineinheit an elektrischer Leistung geschaltet werden kann. Ein Einzelfahrplan einer Photovoltaikanlage wird z.B. immer anzeigen, dass nachts (im Dunkeln) keine Leistung verfügbar ist.

Es wird zumindest ein Zeitintervall ermittelt, innerhalb welchem an der Kleineinheit ein Leistungsaustausch durch die zentrale Steuervorrichtung gemäß vorbestimmten Zugriffsdaten ausgelöst werden darf. Es werden also solche Zeitscheiben ermittelt, in welchen die Steuervorrichtung überhaupt auf die Kleineinheit zugreifen darf. Handelt es sich bei einer solchen Kleineinheit beispielsweise um eine Photovoltaikanlage, so kann der Besitzer oder Betreiber der Kleineinheit zum Beispiel für bestimmte Tageszeiten den Zugriff sperren, um die von der Photovoltaikanlage bereitgestellte Leistung selbst nutzen zu können. Die Zugriffsdaten können beispielsweise durch Vertragsdaten festgelegt sein. Falls die Steuervorrichtung einen Leistungsaustausch schalten darf, kann dies zum Beispiel IT-regelbasiert (IT-Informationstechnologie) erfolgen, also auf Basis einer Regelung, um eine Soll-Leistung zu entnehmen. Der Verfahrensschritt ermittelt also, welcher Anteil der elektrischen Leistung einer Kleineinheit geschaltet werden darf. Zu beachten ist, dass der Leistungsaustausch sowohl das Einspeisen von Leistung in das Übertragungsnetz (also das Anbieten oder Verkaufen) als auch das Ausspeisen aus dem Übertragungsnetz (also das Nachfragen oder Abkaufen) betreffen kann.

Es wird dann für jede Kleineinheit auf der Grundlage des vorbestimmten Abrufplans des Netzbetreibers des Übertragungsnetzes oder der Strombörse ein Bezugswert der gemäß dem Leistungsprofil in dem jeweiligen Zeitintervall bereitstellbaren oder schaltbaren Leistung ermittelt. Der Abrufplan kann beispielsweise einen Preis der Leistung in dem Zeitintervall und/oder einen Bedarf angeben. Der Bezugswert ergibt sich entsprechend als Geldwert oder als Nutzen. Mit Nutzen ist hierbei gemeint, dass für den Fall, dass der Abrufplan Leistungserzeugung als Bedarf signalisiert und eine Kleineinheit aber nur einen Leistungsverbrauch ermöglicht, dies zu keinem Nutzen führt und damit die Kleineinheit für das Zeitintervall uninteressant oder unbrauchbar ist. Durch diesen Verfahrensschritt wird also ermittelt, was die Steuervorrichtung überhaupt schalten will. Dies entscheidet die Steuervorrichtung dahingehend, dass sie eine Kleineinheit für einen Leistungsaustausch mit dem Übertragungsnetz in dem jeweiligen Zeitintervall auswählt, falls der Bezugswert ein vorbestimmtes Optimierungskriterium erfüllt. Der Bezugswert signalisiert also, ob sich in dem Zeitintervall ein Leistungsaustausch mit der Kleineinheit gemäß dem Optimierungskriterium lohnt.

Hat die Steuervorrichtung in dieser Weise alle Kleineinheiten geprüft, so ist bekannt, für welche Zeiteinheiten welche Kleineinheiten geschaltet oder genutzt werden sollen. Die Einteilung in Zeitintervalle kann hierbei in einem vorbestimmten Zeitraster erfolgen. Z.B. kann jedes Zeitintervall 15 Minuten dauern. Die zentrale Steuervorrichtung bildet dann für jedes Zeitintervall aus den Einzelfahrplänen aller für das jeweilige Zeitintervall ausgewählten Kleineinheiten einen Gesamtfahrplan. Mit anderen Worten fasst die Steuervorrichtung die schaltbare elektrische Leistung aller ausgewählten Kleineinheiten zusammen. Die zentrale Steuervorrichtung schaltet dann den Leistungsaustausch der Kleineinheiten mit dem Übertragungsnetz gemäß dem Gesamtfahrplan. Durch das Optimierungskriterium ist dabei sichergestellt, dass nur solche Kleineinheiten beteiligt oder geschaltet werden, durch die sich ein Gesamtnutzen für die Vielzahl der Kleineinheiten ergibt.

Nun kann es in der eingangs beschriebenen Weise dazu kommen, dass die tatsächliche Leistung einer Kleineinheit von dem Einzelfahrplan der Kleineinheit abweicht. Beispielsweise kann durch Bewölkung eine Photovoltaikanlage in ihrer Leistungsfähigkeit beeinträchtigt werden.

Um dennoch dem verbindlichen Abrufplan des Netzbetreibers oder der Strombörse folgen zu können, ist folgendes vorgesehen. Durch die Steuervorrichtung wird aus einer Saldierung des Gesamtfahrplans und des vorgegebenen Abrufplans ein Deltafahrplan berechnet. Dies kann wieder mittels einer IT-Infrastruktur durch die Steuervorrichtung erfolgen. Der Deltafahrplan gibt die Differenz oder Diskrepanz oder Abweichung des Gesamtfahrplans bezüglich des Abrufplans an. Ein an das Übertragungsnetz angeschlossene Zentralspeicher für elektrische Energie wird dann gemäß dem Deltafahrplan angesteuert, sodass der Zentralspeicher mit dem Übertragungsnetz eine elektrische Kompensationsleistung austauscht, damit die technischen Kleineinheiten und der Zentralspeicher zusammen den Abrufplan erfüllen.

Es muss also keine Überkapazität an Kleineinheiten ausgewählt oder vorgehalten werden, um bei einem Ausfall einer Kleineinheit noch genügend elektrische Leistung zum Erfüllen des Abrufplans bereit zu haben. Stattdessen werden nur die (gemäß dem Optimierungskriterium) effizienten Kleineinheiten genutzt und es wird der Zentralspeicher verwendet, um die Kompensationsleistung bereitzustellen, um also die Leistungsdifferenz zwischen dem Gesamtfahrplan der Kleineinheiten und dem geforderten Abrufplan ausgleichen zu können. Es ist hierfür kein ineffizienter Betrieb einer Überkapazität an Kleineinheiten nötig. Stattdessen wird der Zentralspeicher genutzt. Dieser kann zum Beispiel zeitlich vor dem Abrufplan mit elektrischer Energie aus den Kleineinheiten zu günstigeren Bedingungen, bei Photovoltaikanlagen zum Beispiel bei Sonnenschein, aufgeladen werden. Somit müssen die Kleineinheiten nicht zum Zeitpunkt des Abrufplans oder während der Dauer des Abrufplans exakt ihren jeweiligen Einzelfahrplan erfüllen können. Stattdessen ist eine Pufferung mittels des Zentralspeichers möglich.

Somit können die Kleineinheiten effizient oder wirtschaftlich an dem Übertragungsnetz betrieben werden und für einen Abrufplan eines Netzbetreibers oder einer Strombörse insgesamt eine präqualifizierte Infrastruktur darstellen. Mit anderen Worten kann mittels der Vielzahl der Kleineinheiten und des Zentralspeichers zusammen ein vorgegebener Abrufplan des Netzbetreibers oder der Strombörse erfüllt werden.

Zu der Erfindung gehören auch Weiterbildungen, durch die sich zusätzliche Vorteile ergeben.

Das Optimierungskriterium kann einen Schwellenwertvergleich des Bezugswerts mit einem vorbestimmten Schwellenwert vorsehen. Mit anderen Worten werden all diejenigen Kleineinheiten ausgewählt, deren Bezugswert größer oder kleiner als ein vorbestimmter Schwellenwert ist. Bevorzugt ist allerdings vorgesehen, dass eine Gesamtwertoptimierung der insgesamt zwischen dem Zentralspeicher und den Kleineinheiten einerseits und dem Übertragungsnetz andererseits ausgetauschten Leistung durchgeführt wird, also eine Maximierung. Hierzu kann eine Methode des Asset-Management verwendet werden. Schreibt der Abrufplan beispielsweise eine vorbestimmte Gesamtleistung vor, z.B. 2 MW für eine Stunde, so kann die Steuervorrichtung all diejenigen Kleineinheiten auswählen, die insgesamt die Gesamtleistung erbringen können, wobei zusätzlich gemäß dem Optimierungskriterium die Gesamtsumme ihrer Bezugswerte maximiert wird. Die Gesamtleistung muss dabei nicht ausschließlich mittels der Kleineinheiten erbracht werden: Ist im Zentralspeicher günstigere Energie gespeichert, so kann auf deren Grundlage Kompensationsleistung eingespeist werden, anstatt eine teurere Energie aus Kleineinheiten zu verwenden.

Der Zentralspeicher muss aber nicht ausschließlich zum Bereitstellen der Kompensationsleistung vorhanden sein oder betrieben werden. Mittels des Zentralspeichers kann auch noch ein Leistungsaustausch zwischen dem Zentralspeicher und dem Übertragungsnetz zum Erbringen von Regelleistung vorgesehen sein. Die Steuervorrichtung kann hierzu den Zentralspeicher dahingehend ansteuern, dass dieser mit dem Übertragungsnetz elektrische Regelleistung gemäß vorbestimmten Kontraktdaten bereitstellt, sodass sich als ein zusätzlicher Leistungsfluss eine Regelleistung ergibt. Die Kontraktdaten legen dabei eine minimale von dem Zentralspeicher bereitzustellende Regelleistung und den Preis für die Regelleistung fest. Diese Weiterbildung ergibt den Vorteil, dass der Zentralspeicher wirtschaftlich zusätzlich genutzt werden kann.

Um hierbei auch die Kleineinheiten einzubinden, also die Kleineinheiten auch beim Bereitstellen von Regelleistung zu beteiligen, sieht eine Weiterbildung vor, dass zumindest ein Teil der durch die Regelleistung insgesamt ausgetauschten Gesamtregelenergie zeitversetzt mittels den Kleineinheiten umgesetzt wird. Umsetzen bedeutet hier folgendes: Im Falle einer Regelleistungsabgabe (Leistungserzeugung) wird zeitlich vor dem Bereitstellen der Regelleistung mittels der Kleineinheiten in dem Zentralspeicher der besagte Teil der Gesamtregelenergie aggregiert oder gespeichert. Der Zentralspeicher wird also mittels der Kleineinheiten aufgefüllt oder aufgeladen, damit anschließend der Zentralspeicher die Regelleistung bereitstellen kann. Im Falle einer Regelleistungsaufnahme (Leistungsaufnahme) wird dagegen zeitlich nach dem Bereitstellen der Regelleistung der besagte Teil der Gesamtregelenergie in den Kleineinheiten verbraucht. Muss also zum Bereitstellen von Regelleistung der Zentralspeicher aufgeladen werden, um eine Überkapazität im Übertragungsnetz abzubauen, so wird die hierbei aufgenommene oder eingespeicherte Energie hinterher in den Kleineinheiten verbraucht. So ist es ermöglicht, dass auch Kleineinheiten genutzt werden können, um Regelleistung in einem Übertragungsnetz bereitzustellen. Dafür sind die einzelnen Kleineinheiten allein nämlich ansonsten nicht präqualifiziert.

Jede Kleineinheit hat also einen jeweiligen Anteil an der Gesamtregelenergie. Dieser Energiebeitrag (Erzeugung oder Verbrauch) wird ermittelt und anhand der Kontraktdaten wird ein Erlöswert des Anteils berechnet und der Kleineinheit gutgeschrieben. Die Kontraktdaten legen fest, zu welchen Bedingungen der Zentralspeicher die Regelleistung im Übertragungsnetz bereitstellt, also insbesondere zu welchem Preis. Wird dann die Gesamtregelenergie zumindest teilweise durch die Kleineinheiten bereitgestellt oder aufgenommen (Energieverbrauch), so wird Ihnen dieses gemäß den Kontraktdaten vergütet.

Die Energiebeiträge der Kleineinheiten für die Regelleistung werden aber bevorzugt nur aus den Kleineinheiten bezogen, falls es gemäß den Kontraktdaten für das Bereitstellen der Regelleistung günstig ist. Alternativ dazu, falls es also günstiger geht, kann die Energie durch den Zentralspeicher auch aus einer anderen Quelle bezogen oder in dieser verbraucht werden. Der Zentralspeicher bezieht hierzu zum Akkumulieren von Energie vor dem Bereitstellen der Regelleistung über das Übertragungsnetz elektrische Leistung aus einer von den Kleineinheiten verschiedenen Quelle, falls ein Preissignal signalisiert, dass die Quelle preisgünstiger ist als die Kleineinheiten. Es erfolgt also aus einer Kleineinheit kein Energiebezug, falls die elektrische Energie der Kleineinheit kostspieliger ist als die Energie aus der Quelle. Da dennoch der Zentralspeicher geladen werden muss, wird die Energie aus der Quelle bezogen. Genau kann eine im Rahmen der Bereitstellung von Regelleistung aufgenommene oder eingespeicherte Energie an einen anderen Abnehmer als die Kleineinheiten verkauft werden.

Um auch hierbei die Kleineinheiten oder allgemein Benutzer wirtschaftlich beteiligen zu können, kann vorgesehen sein, dass zumindest ein Teil des Zentralspeichers in virtuelle Partitionen eingeteilt ist, von denen jede einen Teil der Speicherkapazität des Zentralspeichers repräsentiert. Die Partitionen stellen Bereiche innerhalb des Zentralspeichers dar, wobei für jede Partition festgelegt oder ermittelt werden kann, ob und wie weit sie gerade mit elektrischer Energie aufgeladen oder entladen ist. Allgemein kann für jede Partition also ein eigener Ladezustand an elektrischer Energie festgelegt werden. Dies erfolgt gemäß einer vorbestimmten Verteilungsregel. Falls also der Zentralspeicher elektrische Energie mit dem Übertragungsnetz austauscht (aufladen oder entladen), so kann durch die Verteilungsregel festgelegt werden, welche Partition dies betrifft. So kann beispielsweise ein Benutzer, dem eine Partition zugeteilt ist, freischalten oder festlegen, dass seine Partition für den Energieaustausch genutzt werden soll. Dann verändert sich der Ladezustand der Partition beim Energieaustausch. Bei einer Veränderung des Ladezustands wird ein Gegenwert der hierdurch mit dem Übertragungsnetz ausgetauschten elektrischen Energie auf einem der jeweiligen Partition zugeordneten Verrechnungskonto verbucht. Der Benutzer, der angegeben hat, dass seine Partition für den Energieaustausch genutzt werden soll, bekommt also auf diesem Verrechnungskonto den Gegenwert, beispielsweise einen monetären Gegenwert, verbucht. So kann also ein Benutzer durch eine Partition im Zentralspeicher ebenfalls partizipieren. Genauso kann auch ein Betreiber einer Kleineinheit für den Fall, dass seine Kleineinheit zum Erfüllen eines Abrufplans nicht genutzt wird, dennoch von dem Abrufplan profitieren, indem er seine Partition in dem Zentralspeicher für das Erbringen der Kompensationsleistung freischaltet. Genauso kann er mittels seiner Kleineinheit eine Partition (über das Übertragungsnetz) aufladen, um dann während der Erfüllung des Abrufplans nicht nur die Leistung aus seiner Kleineinheit bereitstellen zu können, sondern zusätzlich die zuvor in der Partition gespeicherte Energie.

Insgesamt ist somit ein System gebildet, bei welchem eine zentrale Steuervorrichtung mittels eines Zentralspeichers und einer Vielzahl von Kleineinheiten insgesamt am Übertragungsnetz wie eine technische Großeinheit wirkt, also eine technische Einheit, die eine Präqualifikation zum Bereitstellen von Regelleistung an dem Übertragungsnetz aufbringt oder erreicht. Dabei ist aber insbesondere vorgesehen, dass jede Kleineeinheit diese Präqualifikation selbst nicht aufweist oder eben ermangelt. Die durch den Abrufplan geforderte Leistung ist also größer als jede einzelne, durch eine jeweilige Kleineinheit bereitstellbare Leistung. In dem Übertragungsnetz kann also das Bereitstellen von Leistung gemäß dem Abrufplan nur für technische Einheiten zugelassen sein, die eine Präqualifikation größer als ein vorbestimmter Leistungswert, zum Beispiel 1 MW, aufweisen. Jede technische Kleineinheit muss hierbei diese Leistung nicht aufbringen können, sondern kann eine Nennleistung kleiner als der Leistungswert aufweisen. Jede Kleineinheit kann jeweils eine technische Einheit mit einer Nennleistung von weniger 1 MW, insbesondere weniger als 100 KW, sein. Eine Kleineinheit kann also beispielsweise eine Photovoltaikanlage, ein Pumpspeicherkraftwerk, eine Wärmepumpe mit Stromerzeugung, ein elektrisch betreibbares Kraftfahrzeug mit externer Ladeschnittstelle oder ein stationärer Batteriespeicher sein. Die Vielzahl der Kleineinheiten kann dabei unterschiedliche der genannten Anlagen umfassen.

Da in der Energie-Datencloud die Einzelfahrpläne der Kleineinheiten vorliegen oder ermittelt werden können, kann zentral durch die Steuervorrichtung anhand der Einzelfahrpläne auch ein zukünftiges elektrisches Verhalten der Kleineinheiten prognostiziert werden. So kann also beispielsweise für eine bestimmte Tageszeit eines bestimmten Wochentags aus historischen Einzelfahrplänen die Prognose ermittelt werden.

Der Zentralspeicher kann die elektrische Energie mittels elektrochemischer Akkumulatoren (d.h. Batterien) und/oder mittels eines Pumpspeicherkraftwerks speichern, wobei dies nur beispielhafte Angaben für Speichertechnologien sind. Insbesondere weist der Zentralspeicher eine Präqualifikation oder Präqualifizierung von mindestens 1 MW auf. Mit anderen Worten ist der Zentralspeicher für das Bereitstellen von Regelleistung in dem Übertragungsnetz qualifiziert.

Zum Durchführen des Verfahrens sieht die Erfindung die beschriebene Steuervorrichtung vor, die dazu eingerichtet ist, einen Zentralspeicher und eine Vielzahl von Schalteinheiten zum jeweiligen Schalten einer technischen Kleineinheit zu steuern, und zwar gemäß einer Ausführungsform des erfindungsgemäßen Verfahrens. Die Steuervorrichtung kann zum Beispiel als ein Server des Internets bereitgestellt sein. Sie kann einen Computer oder einen Computerverbund oder eine IT-Plattform umfassen. Mit anderen Worten kann das Verfahren auf der Grundlage zumindest eines Mikroprozessors realisiert werden. Die Erfindung umfasst auch das eingangs beschriebene System. Das System umfasst die Steuervorrichtung, den Zentralspeicher und eine Vielzahl von Schalteinheiten zum jeweiligen Schalten einer technischen Kleineinheit. Die Schalteinheit kann beispielsweise als ein Steuerrechner für die Kleineinheit ausgestaltet sein. Jede Schalteinheit kann dazu eingerichtet sein, an jeweils einer Kleineinheit installiert zu werden, um deren Leistungsaustausch mit dem Übertragungsnetz zu steuern. Die Schalteinheiten können mit der zentralen Steuervorrichtung über eine jeweilige Kommunikationsverbindung kommunizieren. Hierzu kann die Kommunikationsverbindung beispielsweise auf der Grundlage einer Internetverbindung gebildet sein. Zum Erfassen der beschriebenen Leistungsdaten, die in der Energie-Datencloud aggregierte werden, kann an jeder Kleineinheit eine Messstelle installiert sein, beispielsweise ein sogenanntes Smartmeter.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert. Es zeigen:
- Fig. 1: eine schematische Darstellung einer Ausführungsform des erfindungsgemäßen Systems;
- Fig. 2: eine Skizze zur Veranschaulichung einer Datenverarbeitung, die in einer Energie-Datencloud einer Steuervorrichtung des Systems durchgeführt werden kann; und
- Fig. 3: eine Skizze zur Veranschaulichung eines Steuerverfahrens für Kleineinheiten und einen Zentralspeicher des Systems von Fig. 1.

In den Figuren sind funktionsgleiche Elemente jeweils mit denselben Bezugszeichen versehen.

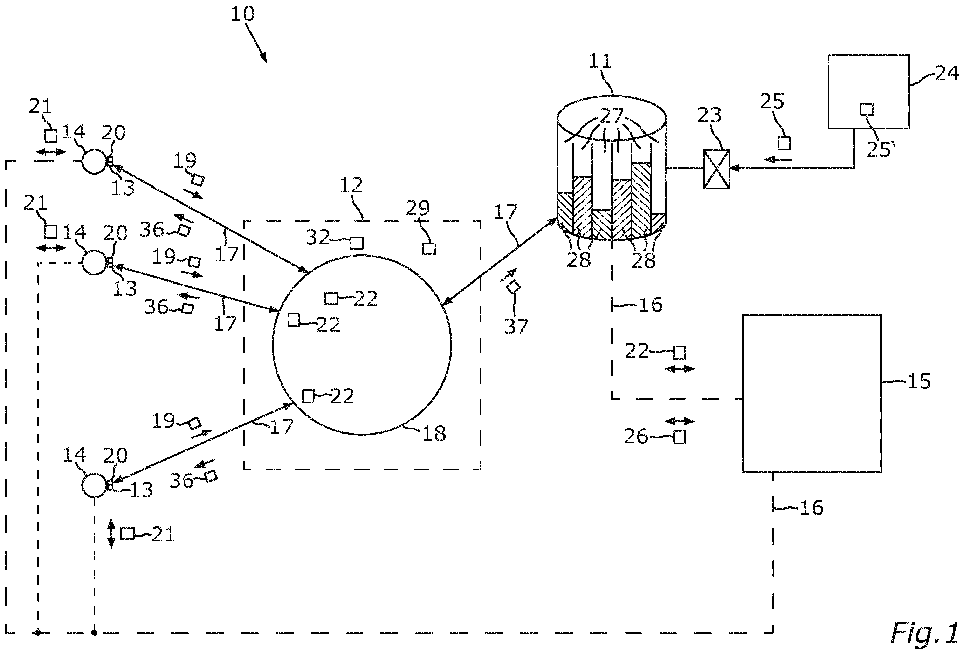

Fig. 1 zeigt ein System 10 mit einem elektrischen Zentralspeicher 11, einer Steuervorrichtung 12 und mehreren Schalteinheiten 13, die jeweils an einer technischen Kleineinheit 14 installiert sein können. Eine technische Kleineinheit 14 kann beispielsweise jeweils eine Photovoltaikanlage oder eine Wärmepumpe oder ein Elektrofahrzeug sein. Jede Kleineinheit 14 kann individuell an ein elektrisches Versorgungsnetz oder Übertragungsnetz 15 angeschlossen sein. Auch der Zentralspeicher 11 kann an das Übertragungsnetz 15 angeschlossen sein. Elektrische Übertragungspfade 16 zum Austauschen von elektrischer Leistung zwischen dem Übertragungsnetz 15 einerseits und den Kleineinheiten 14 oder dem Zentralspeicher 11 andererseits repräsentieren die physikalische Verbindung zwischen den besagten Elementen. Die Steuervorrichtung 12 kann mit den Kleineinheiten 14 und dem Zentralspeicher 11 jeweils über eine Kommunikationsverbindung 17 gekoppelt sein. Die Kommunikationsverbindung 17 kann jeweils zum Beispiel als eine Internetverbindung ausgestaltet sein. Die Servervorrichtung 12 kann zum Beispiel ein Server des Internets sein. Durch die Steuervorrichtung 12 kann eine Energie-Datencloud 18 (kurz: Energy-Cloud) bereitgestellt oder betrieben werden, die beispielsweise eine Datenbank umfassen kann. Über die Kommunikationsverbindungen 17 kann die Steuervorrichtung 12 aus den Kleineinheiten 14 jeweilige Leistungsdaten 19 empfangen und in der Energie-Datencloud 18 aggregieren. Die Leistungsdaten 19 können mittels einer jeweiligen Messstelle 20 an jeder Kleineinheit 14 erfasst oder ermittelt werden. Der Datenaustausch der Leistungsdaten 19 zwischen den Kleineinheiten 14 und der Steuervorrichtung 12 mit dem Zentralspeicher 11 kann optional auf einer Blockchain-Technologie basieren. Dies ermöglicht insbesondere die Authentifizierung und/oder Verifizierung und/oder Abrechnung zwischen den Kleineinheiten 14 und der Steuervorrichtung 12.

Die Leistungsdaten 19 können eine jeweils in der Kleineinheit 14 verfügbare und mit dem Übertragungsnetz 15 austauschbare elektrische Leistung 21 beschreiben oder signalisieren. Die Leistung 21 kann hierbei als verbrauchte Leistung aufgenommen werden oder als erzeugte Leistung abgegeben werden oder eine temporär zwischengespeicherte Leistung angeben. Anhand der Leistungsdaten 19 kann die Steuervorrichtung 20 für jede Kleineinheit 14 einen Einzelfahrplan 22 ermitteln, welcher einen Verlauf der verfügbaren Leistung 21 über der Zeit beschreibt.

Der Zentralspeicher 11 kann eine technische Einheit sein, die als präqualifizierte technische Einheit mit einem Leistungsvermögen von mehr als 1 MW ausgestattet sein kann. Damit kann der Zentralspeicher 11 in dem Übertragungsnetz 15 Regelleistung 22 bereitstellen. Mit anderen Worten ist der Zentralspeicher 11 dafür zugelassen. Preisliche Konditionen für das Bereitstellen der Regelleistung 22 können durch Kontraktdaten 25' z.B. der Strombörse 24 festgelegt sein.

Über eine Datenschnittstelle 23 kann der Zentralspeicher 11 auch von einer Strombörse 24 auch einen Abrufplan 25 empfangen, welcher ein in dem Übertragungsnetz 15 bereitzustellendes Leistungsprofil beschreibt. Der Abrufplan 25 kann z.B. einen Leistungsblock vorsehen, der für eine vorbestimmte Zeitdauer, z.B. 1h oder 2h, eine bereitzustellende Leistung, z.B. 5 MW oder 10 MW, vorgibt. Die Erfüllung des Abrufplans 25 wird monetär entlohnt.

Den Abrufplan 25 kann die Steuervorrichtung 12 nun mittels des Zentralspeichers 11 allein oder durch das System 10 insgesamt erfüllen. Hierzu wird ein Teil, insbesondere der größte Teil der gemäß dem Abrufplan 25 mit dem Übertragungsnetz 15 auszutauschenden elektrischen Leistung durch die Leistung 21 der Kleineinheiten 14 bereitgestellt. Der Zentralspeicher 11 muss dann lediglich eine Kompensationsleistung 26 zum vollständigen Erfüllen des Abrufplans 25 bereitstellen.

Die Speicherkapazität des Zentralspeichers 11 kann zusätzlich in Partitionen 27 eingeteilt sein, denen jeweils ein virtueller Ladezustand 28 zugeordnet ist. Tauscht der Zentralspeicher 11 elektrische Energie als Regelleistung 22 oder Kompensationsleistung 26 aus, so kann für jede Partition 27 durch die Steuervorrichtung 12 gemäß einer Verteilungsregel 29 festgelegt werden, wie sich jeder Ladezustand 28 jeweils ändert. Beispielsweise kann jede Partition 27 an einen Benutzer vermietet sein und der Ladezustand 28 immer dann verändert werden, wenn der Benutzer die Benutzung der Partition 27 zum Bereitstellen oder Aufnehmen der Energie freischaltet oder anfordert. Somit kann ein Benutzer also virtuellen Speicherplatz mieten. D.h., dass keine eigene technische Kleineinheit durch den Benutzer selbst eingebracht werden muss. Da der Zentralspeicher 11 eine Primärregelleistung von mehr als 1 MW bereitstellen kann, kann somit der Benutzer der Partition 27 sich auch am Energiemarkt zum Bereitstellen von Regelleistung beteiligen. Er muss hierzu selbst keinen entsprechenden stationären Batteriespeicher mit dieser Präqualifikation bereitstellen.

Ein Betreiber einer Kleineinheit 14 kann eine Partition 27 ebenfalls in der beschriebenen Weise benutzen, um elektrische Energie zwischenzuspeichern, ohne an der Kleineinheit 14 selbst einen stationären Batteriespeicher bereitstellen zu müssen. Es kann hierzu vorgesehen sein, dass eine Partition 27 einer Kleineinheit 14 zugeordnet ist, sodass ein Austausch von Leistung 21 einer Kleineinheit 14 anhand der Leistungsdaten 19 erfasst und entsprechend der Ladezustand 28 einer Partition 27 eingestellt werden kann. Hierbei kann dann der Zentralspeicher 11 diejenige elektrische Energie, die von der Kleineinheit 14 in das Übertragungsnetz 15 eingespeist oder aus diesem aufgenommen wird, entsprechend durch eigenes Abgeben oder Aufnehmen von Energie ausgleichen. Gegenüber dem Übertragungsnetz 14 ergibt sich hierdurch eine neutrale Energiebilanz.

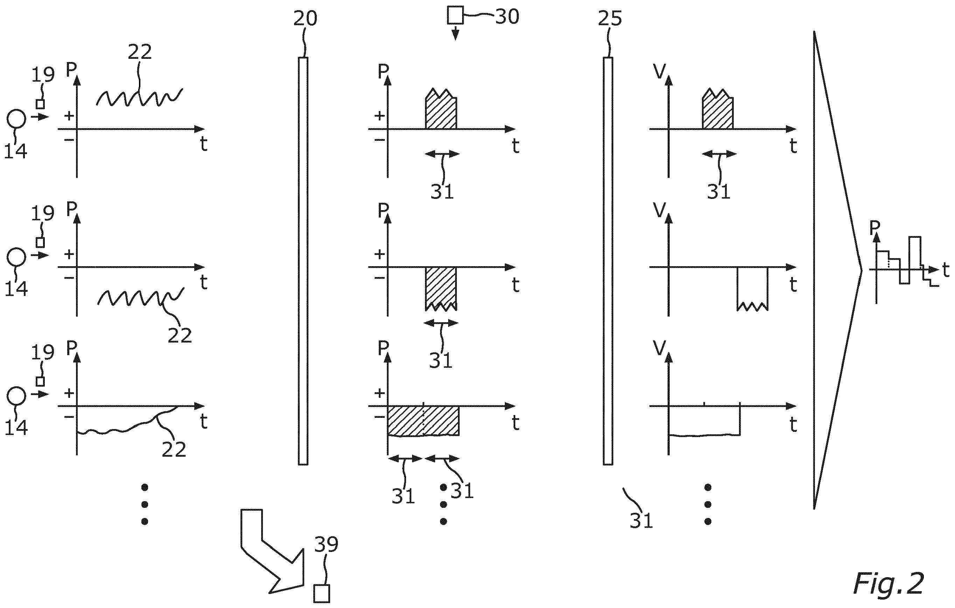

Fig. 2 erläutert, wie durch die Steuervorrichtung 12 die Vermarktung von elektrischer Energie auf Grundlage der Kleineinheiten 14 ermöglicht werden kann, ohne dass hierbei die Präqualifikation verloren geht, die zur Teilnahme an der Strombörse 24 nötig ist.

Fig. 2 veranschaulicht hierzu, wie durch die Steuervorrichtung 12 die Leistungsdaten 19 aus den Kleineinheiten 14 empfangen werden und anhand der Zeitreihe der Leistungswerte der Leistungsdaten 19 jeweils ein Einzelfahrplan 22 ermittelt werden kann, welcher über der Zeit t die verfügbare Leistung 21 (P) beschreibt. Nun kann die Steuervorrichtung 12 nicht durchgehend beliebig mittels der Schalteinrichtungen 13 die Kleineinheiten 14 schalten. Beispielsweise können Vertragsdaten den Zugriff auf die Kleineinheiten 14 für die Steuervorrichtung 12 begrenzen.

Anhand der Einzelfahrpläne 22 wird deshalb entschieden, welche Leistung 21 durch die Steuervorrichtung 12 mittels der Schalteinheiten 13 geschaltet werden kann, also deren Leistungsaustausch gesteuert werden kann. Hierbei werden Zugriffsdaten 30 zugrunde gelegt, welche die Einzelfahrpläne 22 dahingehend einteilen, dass nutzbare Zeitintervalle 31 festgelegt werden, also Zeitintervalle oder Zeitscheiben, innerhalb welchen die Steuervorrichtung 12 jeweils Zugriff auf die jeweilige Kleineinheit 14 hat, um sie mittels der Schalteinheiten 13 zu schalten. Nun ist aber nicht jedes Zeitintervall 31 geeignet, um den Abrufplan 25 zu erfüllen. Der Betrieb einer Kleineinheit 14 kann Kosten verursachen, die dadurch gedeckt werden müssen, dass Einnahmen durch das erfüllen des Abrufplans 25 entstehen. Mit anderen Worten kann durch den Abrufplan 25 ein Preis für die bereitgestellte Leistung 21 festgelegt sein. Anhand des Abrufplans 25 werden also aus den Zeitintervallen 31 diejenigen ausgewählt, für die sich ein Nutzwert oder Bezugswert V (V - value) ergibt, der einen Gewinn oder einen effizienten Betrieb der Kleineinheit 14 signalisiert.

Anhand des Abrufplans 25 kann also die Steuervorrichtung 12 ein Optimierungskriterium 32 bilden, anhand welchem jedes Zeitintervall 31 jeder Kleineinheit 14 bewertet werden kann. Sieht der Abrufplan 25 für ein Zeitintervall 31 beispielsweise das Liefern oder Bereitstellen von elektrischer Leistung vor, so kann verbrauchte Leistung einer Kleineinheit 14 keinen nutzbaren Beitrag leisten. Ist die gemäß Abrufplan 25 bereitzustellende Leistung im Leistungswert begrenzt, beispielsweise 2 MW, so kann die Steuervorrichtung 12 durch das Optimierungskriterium 32 festlegen, dass die günstigsten Kleineinheiten 14 ausgewählt werden, bis der Wert der Leistung erreicht ist.

Es werden also Kleineinheiten 14 ausgewählt, die für ein vorgegebenes Zeitintervall 31 jeweils gemäß dem Abrufplan 25 effizient betrieben werden können. Insgesamt kann hierdurch über der Zeit t die verfügbare Leistung P zu einem insgesamt an den Kleineinheiten 14 verfügbaren Gesamtabrufplan 33 zusammengefasst werden.

Anhand der Einzelfahrpläne 22 kann die Steuervorrichtung 12 auch eine Prognose 39 eines zukünftigen elektrischen Verhaltens der Kleineinheiten 14 extrapolieren.

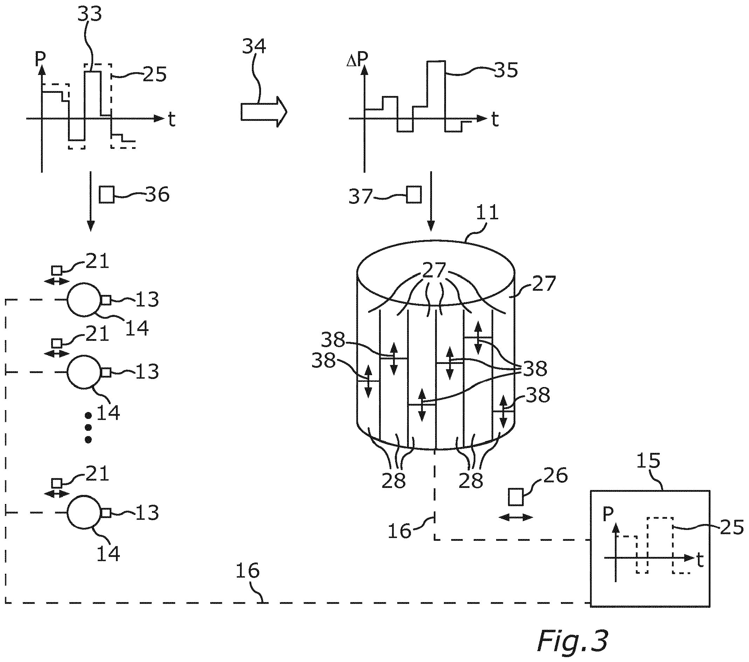

Fig. 3 veranschaulicht den Betrieb des Systems 10 zum Erfüllen des Abrufplans 25. Die Steuervorrichtung 12 kann aus dem Abrufplan 25 und dem Gesamtfahrplan 33 der Kleineinheiten 14 durch eine Saldierung 34 oder Differenzbildung einen fehlenden Anteil ΔP an der gemäß dem Abrufplan 25 geforderten Leistung ermitteln, woraus sich ein Deltafahrplan 35 ergibt.

Gemäß dem Gesamtfahrplan 33 können dann Steuersignale 36 an die Schalteinrichtungen 13 der Kleineinheiten ausgesendet werden. Mittels des Deltafahrplans 35 kann ein Steuersignal 37 für den Zentralspeicher 11 erzeugt werden, sodass dieser die entsprechende Kompensationsleistung 26 bereitstellt. Die von den Kleineinheiten 14 bereitgestellte Leistung 21 und die Kompensationsleistung 26 ergeben in dem Übertragungsnetz 15 insgesamt den Abrufplan 25. Somit wird mittels des Zentralspeichers 11 garantiert oder sichergestellt, dass das System 10 den Abrufplan 25 erfüllt. Zudem kann mittels des Zentralspeichers 11 die für die Teilnahme an der Strombörse 24 geforderte Präqualifikation nachgewiesen werden.

Die Energie, die zum Bereitstellen der Kompensationsleistung 26 vom Zentralspeicher 10 abgegeben wird oder von diesem aufgenommen wird, kann dann auch zu einer Veränderung 38 der Ladezustände 28 der Partitionen 27 führen. Ist eine Kleineinheit 14 einer Partition 27 zugeordnet, so wird also nicht nur die Leistung 21, welche die Kleineinheit 14 momentan oder aktuell während der Umsetzung des Abrufplans 25 bereitstellt, genutzt. Stattdessen kann zusätzlich vor dem Erfüllen des Abrufplans 25 elektrische Energie von der Kleineinheit 14 in eine Partition 27 übertragen und dann zusätzlich genutzt werden.

### Bezugszeichenliste

- 10: System
- 11: Elektrischer Zentralspeicher
- 12: Steuervorrichtung
- 13: Schalteinheit
- 14: Technische Kleineinheit
- 15: Elektrisches Übertragungsnetz
- 16: Übertragungspfad
- 17: Kommunikationsverbindung
- 18: Energie-Datencloud
- 19: Leistungsdaten
- 20: Messstelle
- 21: Leistung
- 22: Regelleistung
- 23: Datenschnittstelle
- 24: Strombörse
- 25: Abrufplan
- 25': Kontraktdaten
- 26: Kompensationsleistung
- 27: Partition
- 28: Ladezustand
- 29: Verteilungsregel
- 30: Zugriffsdaten
- 31: Zeitintervall
- 32: Optimierungskriterium
- 33: Gesamtfahrplan
- 34: Saldierung
- 35: Deltafahrplan
- 36: Steuersignal
- 37: Steuersignal
- 38: Änderung Ladezustand
- 39: Prognose
- P: Leistung
- ΔP: Leistungsdifferenz
- V: Bezugswert
- t: Zeit

## Patentansprüche

1. Verfahren zum Koordinieren eines Leistungsaustauschs zwischen einer Vielzahl von technischen Kleineinheiten (14) einerseits und einem Übertragungsnetz (15) andererseits, wobei eine zentrale Steuervorrichtung (12) eine Energie-Datencloud (18) betreibt, in welcher die Steuervorrichtung (12) Leistungsdaten (19) der Kleineinheiten (14) aggregiert und anhand welcher die Steuervorrichtung (12) für jede Kleineinheit (14) jeweils:
- einen Einzelfahrplan (22) einer an der Kleineinheit (14) verfügbaren elektrischen Leistung (21) erfasst,
- zumindest ein Zeitintervall (31) ermittelt, innerhalb welchem an der Kleineinheit (14) der Leistungsaustausch durch die zentrale Steuervorrichtung (12) gemäß vorbestimmten Zugriffsdaten (30) ausgelöst werden darf,
- auf der Grundlage eines vorbestimmten Abrufplans (25) eines Netzbetreibers des Übertragungsnetzes (15) oder einer Strombörse (24) einen Bezugswert (V) der gemäß dem Einzelfahrplan (22) in dem jeweiligen Zeitintervall (31) bereitstellbaren Leistung (21) ermittelt, und,
- falls der Bezugswert (V) ein vorbestimmtes Optimierungskriterium (32) erfüllt, die Kleineinheit (14) für einen Leistungsaustausch mit dem Übertragungsnetz (15) in dem jeweiligen Zeitintervall (31) auswählt,
wobei die zentrale Steuervorrichtung (12) für jedes ermittelte Zeitintervall (31) aus den Einzelfahrplänen (22) aller für das jeweilige Zeitintervall (31) ausgewählten Kleineinheiten (14) einen Gesamtfahrplan (33) bildet und den Leistungsaustausch der Kleineinheiten (14) mit dem Übertragungsnetz (15) gemäß dem Gesamtfahrplan (33) schaltet, **dadurch gekennzeichnet, dass**
durch die Steuervorrichtung (12) aus einer Saldierung (34) des Gesamtfahrplans (33) und des Abrufplans (25) des Netzbetreibers oder der Strombörse (24) ein Deltafahrplan (35) berechnet wird und ein an das Übertragungsnetz (15) angeschlossener Zentralspeicher (11) gemäß dem Deltafahrplan (35) ansteuert wird, sodass der Zentralspeicher (11) mit dem Übertragungsnetz (15) eine elektrische Kompensationsleistung (26) austauscht, damit die technischen Kleineinheiten (14) und der Zentralspeicher (11) zusammen den Abrufplan (25) erfüllen.

2. Verfahren nach Anspruch 1, wobei das Optimierungskriterium (32) einen Schwellenwertvergleich mit einem vorbestimmten Schwellenwert und/oder eine Gesamtwertoptimierung der insgesamt zwischen dem Zentralspeicher (11) und den Kleineinheiten (14) einerseits und dem Übertragungsnetz (15) andererseits ausgetauschten Leistung (21, 26) vorsieht.

3. Verfahren nach einem der vorhergehenden Ansprüche, wobei die Steuervorrichtung (12) den Zentralspeicher (11) zusätzlich dahingehend ansteuert, dass dieser mit dem Übertragungsnetz (15) elektrische Regelleistung (22) gemäß vorbestimmten Kontraktdaten (25') bereitstellt, sodass sich ein zusätzlicher Leistungsfluss an Regelleistung (22) ergibt.

4. Verfahren nach Anspruch 3, wobei zumindest ein Teil einer durch den Leistungsfluss insgesamt ausgetauschten Gesamtregelenergie:
a) im Falle einer Regelleistungsabgabe: vor dem Bereitstellen der Regelleistung (22) mittels der Kleineinheiten (14) in dem Zentralspeicher (11) akkumuliert wird und/oder
b) im Falle von Regelleistungsaufnahme: nach dem Bereitstellen der Regelleistung (22) in den Kleineinheiten (14) verbraucht wird.

5. Verfahren nach Anspruch 4, wobei für jede Kleineinheit (14) ein jeweiliger Anteil, den die Kleineinheit (14) durch ihren jeweiligen Energiebeitrag an der Gesamtregelenergie hat, ermittelt wird und anhand der Kontraktdaten (25') ein Erlöswert des Anteils berechnet und der Kleineinheit (14) gutgeschrieben wird.

6. Verfahren nach einem der vorhergehenden Ansprüche, wobei der Zentralspeicher (11) zum Akkumulieren von Energie vor dem Bereitstellen der Regelleistung (22) über das Übertragungsnetz (15) elektrische Leistung aus einer von den Kleineinheiten (14) verschiedenen Quelle bezieht, falls ein Preissignal signalisiert, dass die Quelle preisgünstiger ist als die Kleineinheiten (14).

7. Verfahren nach einem der vorhergehenden Ansprüche, wobei zumindest ein Teil des Zentralspeichers (11) in virtuelle Partitionen (27) eingeteilt ist, von denen jede einen Teil einer Speicherkapazität des Zentralspeichers (11) repräsentiert, und für jede Partition (27) ein eigener Ladezustand (28) an elektrischer Energie gemäß einer vorbestimmten Verteilungsregel (29) festgelegt wird und bei einer Veränderung (38) des Ladezustands (28) ein Gegenwert der hierdurch mit dem Übertragungsnetz (15) ausgetauschten elektrischen Energie auf einem der jeweiligen Partition (27) zugeordneten Verrechnungskonto verbucht wird.

8. Verfahren nach einem der vorhergehenden Ansprüche, wobei die durch den Abrufplan (25) geforderte Leistung (P) größer als jede durch eine jeweilige Kleineinheit (14) bereitstellbare Leistung (21) ist.

9. Verfahren nach einem der vorhergehenden Ansprüche, wobei in dem Übertragungsnetz (15) das Bereitstellen von Leistung (P) gemäß dem Abrufplan (25) nur für technische Einheiten zugelassen ist, die eine Präqualifikation größer als ein vorbestimmter Leistungswert aufweisen, und jede technische Kleineinheit (14) eine Nennleistung kleiner als der Leistungswert aufweist.

10. Verfahren nach einem der vorhergehenden Ansprüche, wobei jede Kleineinheit (14) jeweils eine technische Einheit mit einer Nennleistung von weniger als 1 MW, insbesondere weniger als 100 kW ist.

11. Verfahren nach einem der vorhergehenden Ansprüche, wobei die Kleineinheiten (14) eine oder mehrere der folgenden umfassen: eine Photovoltaikanlage, ein Pumpspeicherkraftwert, eine Wärmepumpe, ein elektrisch betreibbares Kraftfahrzeug mit externer Ladeschnittstelle, ein stationärer Batteriespeicher.

12. Verfahren nach einem der vorhergehenden Ansprüche, wobei der Zentralspeicher (11) elektrische Energie mittels elektrochemischen Akkumulatoren und/oder mittels eines Pumpspeicherkraftwerks speichert, wobei der Zentralspeicher (11) eine Präqualifikation von mindestens 1 MW aufweist.

13. Verfahren nach einem der vorhergehenden Ansprüche, wobei anhand der Einzelfahrpläne (22) eine Prognose eines zukünftigen elektrischen Verhaltens extrapoliert wird.

14. Steuervorrichtung (12), die dazu eingerichtet ist, einen Zentralspeicher (11) und eine Vielzahl von Schalteinheiten (13) zum jeweiligen Schalten einer jeweiligen technischen Kleineinheit (14) gemäß einem Verfahren nach einem der vorhergehenden Ansprüche zu steuern.

15. System (10) umfassend: eine Steuervorrichtung (12) nach Anspruch 14, einen Zentralspeicher (11) und eine Vielzahl von Schalteinheiten (13) zum jeweiligen Schalten einer jeweiligen technische Kleineinheiten (14).

## Claims

1. Method for coordinating an exchange of power between a plurality of technical small units (14) on the one hand and a transmission network (15) on the other hand, wherein
a central control device (12) operates an energy data cloud (18), in which the control device (12) aggregates power data (19) of the small units (14) and on the basis thereof, for each small unit (14) the control device (12) in each case:
- records an individual schedule (22) for an available electrical power (21) on the small unit (14),
- determines at least one time interval (31), within which the exchange of power is allowed to be initiated on the small unit (14) by the central control device (12) in accordance with predetermined access data (30),
- on the basis of a predetermined call-off plan (25) of a network operator of the transmission grid (15) or an electricity exchange (24), determines a reference value (V) of the available power (21) in the respective time interval (31) in accordance with the individual schedule (22), and,
- if the reference value (V) satisfies a predetermined optimization criterion (32), selects the small unit (14) for an exchange of power with the transmission grid (15) in the respective time interval (31),
wherein for each identified time interval (31), from the individual schedules (22) of all small units (14) selected for the respective time interval (31), the central control device (12) forms an overall schedule (33) and selects the power exchange of the small units (14) with the transmission grid (15) in accordance with the overall schedule (33), and **characterized in that** by means of the control device (12), from a balancing (34) of the overall schedule (33) and the call-off plan (25) of the network operator or electricity exchange (24), a delta schedule (35) is calculated and a central store (11) connected to the transmission grid (15) is activated in accordance with the delta schedule (35), so that the central store (11) exchanges an electrical compensation power (26) with the transmission grid (15), so that the technical small units (14) and the central store (11) together fulfil the call-off plan (25).

2. Method according to Claim 1, wherein the optimization criterion (32) provides a threshold value comparison with a predefined threshold value and/or an overall value optimization of the total power (21, 26) exchanged between the central store (11) and the small units (14), on the one hand, and the transmission grid (15), on the other hand.

3. Method according to one of the preceding claims, wherein the control device (12) additionally controls the central store (11) so that the latter supplies electrical control power (22) with the transmission grid (15) in accordance with predetermined contract data (25'), so that an additional power flow of control power (22) is obtained.

4. Method according to Claim 3, wherein at least a part of a total control energy exchanged by the power flow overall:
a) in the case of a control power output: is accumulated in the central store (11) by means of the small units (14) before the supply of the control power (22) and/or
b) in the case of control power uptake: is consumed in the small units (14) after the supply of the control power (22).

5. Method according to Claim 4, wherein for each small unit (14) a respective portion is determined, which the small unit (14) has due to its respective energy contribution to the total control energy, and on the basis of the contract data (25') a revenue value of the portion is calculated and credited to the small unit (14) .

6. Method according to one of the preceding claims, wherein to accumulate energy before the supply of the control power (22) the central store (11) draws electrical power via the transmission grid (15) from a different source than the small units (14), if a price signal indicates that the source is cheaper than the small units (14).

7. Method according to one of the preceding claims, wherein at least a part of the central store (11) is subdivided into virtual partitions (27), each of which represents a part of a storage capacity of the central store (11), and for each partition (27) a separate charge status (28) of electrical energy is specified in accordance with a predetermined distribution rule (29), and in the event of a change (38) in the charge status (28) an equivalent value of the resulting electrical energy exchanged with the transmission grid (15) is charged to a billing account associated with the respective partition (27).

8. Method according to one of the preceding claims, wherein the power (P) required by the call-off plan (25) is greater than any power (21) that can be supplied by each individual small unit (14).

9. Method according to one of the preceding claims, wherein in the transmission grid (15) the supply of power (P) in accordance with the call-off plan (25) is only permitted for technical units which have a pre-qualification greater than a predefined power value, and each technical small unit (14) has a nominal power less than the power value.

10. Method according to one of the preceding claims, wherein each small unit (14) is a technical unit with a nominal power of less than 1 MW, in particular less than 100 kW.

11. Method according to one of the preceding claims, wherein the small units (14) comprise one or more of the following: a photovoltaic system, a pumped-storage power plant, a heat pump, an electrically operable motor vehicle with external charging interface, a stationary battery accumulator.

12. Method according to one of the preceding claims, wherein the central store (11) stores electrical energy by means of electrochemical rechargeable batteries and/or by means of a pumped-storage power plant, the central store (11) having a pre-qualification of at least 1 MW.

13. Method according to one of the preceding claims, wherein on the basis of the individual schedules (22) a forecast of future electrical behavior is extrapolated.

14. Control device (12), which is configured to control a central store (11) and a plurality of switching units (13) for respectively selecting a respective technical small unit (14) in accordance with a method according to one of the preceding claims.

15. System (10) comprising: a control device (12) according to Claim 14, a central store (11) and a plurality of switching units (13) for respectively selecting a respective technical small unit (14).

## Revendications

1. Procédé de coordination d'un échange de puissance entre une pluralité de petites unités techniques (14), d'une part, et un réseau de transmission (15), d'autre part, dans lequel
un dispositif de commande central (12) exploite un nuage de données d'énergie (18) dans lequel le dispositif de commande (12) agrège des données de puissance (19) des petites unités (14) et sur la base duquel, pour chaque petite unité (14) respective, le dispositif de commande (12) :
- acquiert un horaire individuel (22) d'une puissance électrique (21) disponible au niveau de la petite unité (14),
- détermine au moins un intervalle de temps (31) au cours duquel l'échange de puissance par le dispositif de commande central (12) peut être déclenché sur la petite unité (14) conformément à des données d'accès prédéterminées (30),
- sur la base d'un programme d'appel prédéterminé (25) d'un gestionnaire de réseau de transport (15) ou d'une bourse de courant (24), détermine une valeur de référence (V) de la puissance (21) qui peut être fournie au cours de l'intervalle de temps respectif (31) conformément à l'horaire individuel (22) et,
- dans le cas où la valeur de référence (V) répond à un critère d'optimisation prédéterminé (32), sélectionne la petite unité (14) pour un échange de puissance avec le réseau de transmission (15) au cours de l'intervalle de temps respectif (31),
dans lequel le dispositif de commande central (12) forme à partir des horaires individuels (22) de toutes les petites unités (14) sélectionnées pour l'intervalle de temps respectif (31) un horaire global (33) pour chaque intervalle de temps déterminé (31) et commute l'échange de puissance des petites unités (14) avec le réseau de transmission (15) conformément à l'horaire global (33), **caractérisé en ce qu'**un horaire delta (35) est calculé par le dispositif de commande (12) à partir d'une totalisation (34) de l'horaire global (33) et du programme d'appel (25) du gestionnaire de réseau ou de la bourse de courant (24), et un accumulateur central (11) raccordé au réseau de transmission (15) est commandé conformément à l'horaire delta (35), de sorte que l'accumulateur central (11) échange avec le réseau de transmission (15) une puissance de compensation électrique (26), les petites unités techniques (14) et l'accumulateur central (11) remplissant ainsi ensemble le programme d'appel (25).

2. Procédé selon la revendication 1, dans lequel le critère d'optimisation (32) prévoit une comparaison à valeur de seuil effectuée avec une valeur de seuil prédéterminée et/ou une optimisation de valeur globale de la puissance (21, 26) échangée globalement entre l'accumulateur central (11) et les petites unités (14), d'une part, et le réseau de transmission (15), d'autre part.

3. Procédé selon l'une des revendications précédentes, dans lequel le dispositif de commande (12) commande en outre l'accumulateur central (11) de sorte qu'il fournisse au réseau de transmission (15) une puissance de régulation électrique (22) conformément à des données contractuelles (25') prédéterminées afin qu'il en résulte un flux supplémentaire de puissance de régulation (22).

4. Procédé selon la revendication 3, dans lequel au moins une partie d'une énergie de régulation globale échangée globalement par l'intermédiaire du flux de puissance :
a) dans le cas d'une fourniture de puissance de régulation : est accumulée dans l'accumulateur central (11) avant que la puissance de régulation (22) ne soit fournie au moyen des petites unités (14) et/ou
b) dans le cas d'un prélèvement de puissance de régulation : est consommée dans de petites unités (14) après la fourniture de la puissance de régulation (22).

5. Procédé selon la revendication 4, dans lequel, pour chaque petite unité (14), une part respective que représente la petite unité (14) dans l'énergie de régulation totale par le biais de sa contribution énergétique respective est déterminée et une valeur de revient de ladite part est calculée sur la base des données contractuelles (25') et est créditée à la petite unité (14).

6. Procédé selon l'une des revendications précédentes, dans lequel l'accumulateur central (11), pour accumuler de l'énergie avant la fourniture de la puissance de régulation (22) par l'intermédiaire du réseau de transmission (15), prélève de l'énergie électrique à partir d'une source différente des petites unités (14) dans le cas où un signal de tarification indique que ladite source est plus économique que les petites unités (14) .

7. Procédé selon l'une des revendications précédentes, dans lequel au moins une partie de l'accumulateur central (11) est subdivisée en partitions virtuelles (27), dont chacune représente une partie d'une capacité d'accumulation de l'accumulateur central (11), et pour chaque partition (27) un état de charge propre (28) d'énergie électrique est déterminé conformément à une règle de répartition prédéterminée (29) et, lors d'une modification (38) de l'état de charge (28), une contre-valeur de l'énergie électrique ainsi échangée avec le réseau de transmission (15) est comptabilisée sur un compte de règlement associé à la partition correspondante (27) .

8. Procédé selon l'une des revendications précédentes, dans lequel la puissance (P) requise par le programme d'appel (25) est supérieure à une puissance (21) qui peut être fournie par une petite unité respective (14).

9. Procédé selon l'une des revendications précédentes, dans lequel, dans le réseau de transmission (15), la fourniture de puissance (P) conformément au programme d'appel (25) n'est autorisée que pour des unités techniques qui présentent une préqualification supérieure à une valeur de puissance prédéterminée, et chaque petite unité technique (14) présente une puissance nominale inférieure à la valeur de puissance.

10. Procédé selon l'une des revendications précédentes, dans lequel chaque petite unité (14) est une unité technique ayant une puissance nominale inférieure à 1 MW, en particulier inférieure à 100 kW.

11. Procédé selon l'une des revendications précédentes, dans lequel les petites unités (14) comprennent un ou plusieurs des éléments suivants : une installation photovoltaïque, une centrale d'accumulation par pompage, une pompe à chaleur, un véhicule automobile électrique doté d'une interface de charge externe, un accumulateur à batterie stationnaire.

12. Procédé selon l'une des revendications précédentes, dans lequel l'accumulateur central (11) accumule de l'énergie électrique au moyen d'accumulateurs électrochimiques et/ou au moyen d'une centrale d'accumulation par pompage, dans lequel l'accumulateur central (11) présente une préqualification d'au moins 1 MW.

13. Procédé selon l'une des revendications précédentes, dans lequel une prévision d'un comportement électrique futur est extrapolée sur la base des horaires individuels (22) .

14. Dispositif de commande (12) qui est conçu pour commander un accumulateur central (11) et une pluralité d'unités de commutation (13) permettant de commuter respectivement une petite unité technique respective (14) conformément à un procédé selon l'une des revendications précédentes.

15. Système (10) comprenant : un dispositif de commande (12) selon la revendication 14, un accumulateur central (11), et une pluralité d'unités de commutation (13) permettant la commutation respective d'une petite unité technique respective (14).
